# EUROPÄISCHE PATENTANMELDUNG

(11) **EP 1 961 697 A1**
(43) Veröffentlichungstag der Anmeldung: **27.08.2008**
(21) Anmeldenummer: 08000388.2
(22) Anmeldetag: 10.01.2008
(51) Int. Cl.: C01B 3/02, B01D 53/00, F25J 3/02

(54) **Erzeugung von Produkten aus Raffinerieabgasen**

(30) Priorität: 30.01.2007 DE 102007004628
(71) Anmelder: Linde Aktiengesellschaft, 80807 München (DE)
(72) Erfinder: Brunazzi, Carlo, 80538 München (DE); Freitag, Christian, 80538 München (DE); Innocenzi, Stefano, 80637 München (DE); Kusser, Erich, 80997 München (DE); Lang, Martin, 80689 München (DE)
(74) Vertreter: Zahn, Christoph

(57) **Zusammenfassung**

Die Erfindung betrifft ein Verfahren zur Behandlung eines zum überwiegenden Teil aus Stickstoff (N₂), Kohlenmonoxid (CO) und Wasserstoff (H₂) bestehenden und weitere Luftkomponenten, wie z. B. Argon (Ar), sowie Kohlendioxid (CO₂), Wasserdampf und Schwefelverbindungen enthaltenden Einsatzes (1) sowie eine Vorrichtung zur Durchführung des Verfahrens. Aus dem Einsatz (1) werden durch Reinigung und Gaszerlegung ein H₂- (13) und/oder ein CO-Produkt (8) sowie zumindest ein weiteres, aus einer Luftkomponente bestehendes Produkt (Zusatzprodukt) (9, 10, 11) gewonnen.

## Beschreibung

Die Erfindung betrifft ein Verfahren zur Behandlung eines zum überwiegenden Teil aus Stickstoff (N₂), Kohlenmonoxid (CO) und Wasserstoff (H₂) bestehenden und weitere Luftkomponenten, wie z. B. Argon (Ar), sowie Kohlendioxid (CO₂), Wasserdampf und Schwefelverbindungen enthaltenden Einsatzes sowie eine Vorrichtung zur Durchführung des Verfahrens.

In industriellen Prozessen, wie beispielsweise bei der Verarbeitung von Rohöl in Raffinerien, entstehen Abgase, die Wasserstoff (H₂) und/oder Kohlenmonoxid (CO) enthalten, die aber zum überwiegenden Teil aus Stickstoff (N₂) bestehen und darüber hinaus inerte Luftbestandteile, wie Argon (Ar), sowie Verbrennungsprodukte, wie z. B. Schwefeldioxid (SO₂) und Kohlendioxid (CO₂) aufweisen.

Ein derartiges Abgas entsteht beispielsweise bei der katalytischen Spaltung (Fluid Catalytic Cracking oder FCC) von Rohöldestillaten. Bei diesem Verfahren ist es erforderlich, das Katalysatormaterial von Zeit zu Zeit zu regenerieren, da sich bei der Spaltung entstehender Koks auf dem Katalysatormaterial absetzt und dessen Wirksamkeit verschlechtert. Zur Regenerierung wird das mit Koks beladene Katalysatormaterial einer thermischen Behandlung (Ausbrennen) unterzogen, bei der der Koks vergast, d. h. mit Luftsauerstoff zu Kohlenmonoxid und Kohlendioxid umgesetzt wird. Um die Schädigung des Katalysatormaterials durch zu hohe Temperaturen zu vermeiden, wird die Regenerierung unter Sauerstoffmangel durchgeführt, wodurch der Koks nicht vollständig zu CO₂, sondern teilweise lediglich zu CO umgesetzt wird. Das bei der Katalysatorregenerierung erzeugte Abgas enthält daher CO in einer nennenswerten Konzentration, die jedoch gering ist im Vergleich zu den Konzentrationen von Stickstoff, der gemeinsam mit dem Luftsauerstoff dem Regenerierungsprozess zugeleitet wird, und Kohlendioxid.

In einer Raffinerie anfallende schwere, d. h. langkettige Rückstände, die nicht direkt wirtschaftlich verwertbar sind (z. B. Vakuumrückstände), werden häufig durch sog. Integrated Fluid Coking-Gasification in kurzkettige Kohlenwasserstoffe umgesetzt. Der bei diesem Verfahren anfallend Koks wird mit Luft vergast, wobei ein Abgas entsteht, das eine Ähnliche Zusammensetzung wie ein oben beschriebenes FCC-Abgas besitz, darüber hinaus aber auch Wasserstoff enthält. Ein derartiges Gas setzt sich wie folgt zusammen:
- Stickstoff: 30 bis 60Vol%; typisch 40 und 45Vol%
- Kohlenmonoxid: 10 bis 30Vol%; typisch 15 bis 25Vol%
- Wasserstoff: 10 bis 30Vol%; typisch 10 bis 20Vol%
- Kohlendioxid: < 15Vol%; typisch < 10Vol%
- Methan: < 5Vol%; typisch < 2Vol%
- Schwefelverbindungen: < 3Vol%; typisch < 1 Vol%

Wasserstoff und Kohlenmonoxid sind in der chemischen und petrochemischen Industrie für eine Vielzahl von Anwendungen begehrte Rohstoff. Wegen ihrer vergleichsweise geringen Konzentrationen, ist es nach dem Stand der Technik nicht möglich, CO- und/oder H₂ aus oben beschriebenen Abgasen auf wirtschaftliche Weise in Produktqualität abzutrennen. Bisher werden derartige Abgase daher zur Unterfeuerung, beispielsweise in Dampferzeugern, eingesetzt, wo sie andere Energieträger (z. B. Erdgas) substituieren. Nachteilig hierbei ist allerdings, dass die zu beheizenden Einrichtungen wegen des großen Stickstoffballasts mit deutlich größeren Heizflächen und damit teurer ausgeführt werden müssen, als dies bei einer Beheizung mit Erdgas der Fall ist.

Der vorliegenden Erfindung liegt daher die Aufgabe zugrunde, ein Verfahren der eingangs genannten Art sowie eine Vorrichtung zur Durchführung des Verfahrens anzugeben, die es erlauben, einen Einsatz mit einem höheren wirtschaftlichen Nutzen zu verwerten, als dies nach dem Stand der Technik möglich ist.

Diese Aufgabe wird verfahrensseitig erfindungsgemäß dadurch gelöst, dass aus dem Einsatz durch Reinigung und Gaszerlegung ein H₂- und/oder ein CO-Produkt sowie zumindest ein weiteres, aus einer Luftkomponente bestehendes Produkt (Zusatzprodukt) gewonnen werden.

Der Erfindung liegt der Gedanke zugrunde, dass die Erzeugung eines Zusatzproduktes die Wirtschaftlichkeit der H₂- und/oder CO-Erzeugung erhöht, solange der erzielbare Erlös für ein Zusatzprodukt höher ist, als die auf das Zusatzprodukt entfallenden Erzeugungskosten. Um die Erzeugungskosten gering zu halten, wird das erfindungsgemäße Verfahren daher bevorzugt aus bekannten Teilschritten aufgebaut, die bereits in der Praxis ihre Wirtschaftlichkeit und Zuverlässigkeit unter Beweis gestellt haben.

Abhängig von der Zusammensetzung des Einsatzes sowie der Art und der Mengenverhältnisse der zu erzeugenden Produkte, umfasst das erfindungsgemäße Verfahren unterschiedlich viele Teilschritte, jedoch zumindest die Verfahrensschritte Verdichtung, Sauergaswäsche, Gastrocknung sowie kryogene Gaszerlegung.

Besitzt ein Gasstrom, der in einen Teilschritt des erfindungsgemäßen Verfahrens eingeleitet werden soll, eine Temperatur, die eine Behandlung in diesem Teilschritt unmöglich oder zumindest doch unwirtschaftlich macht, so sieht eine zweckmäßige Ausgestaltung des erfindungsgemäßen Verfahrens vor, das die Temperatur des Gasstroms durch Erwärmen oder Abkühlen auf einen Wert erhöht oder erniedrigt wird, der eine wirtschaftliche Behandlung des Gasstromes in diesem Teilschritt erlaubt.

Bei einer Verdichtung wird der Druck eines Gases erhöht und gleichzeitig sein Volumen verkleinert. Anlagenteilen, in denen der Verdichtung nachfolgende Verfahrensschritte durchgeführt werden, können daher mit einer entsprechend verminderten Baugröße ausgeführt werden. Eine zweckmäßige Ausgestaltung des erfindungsgemäßen Verfahrens sieht daher vor, dass der Einsatz in einem ersten oder zumindest in einem der ersten Verfahrensschritte einer Verdichtung unterzogen wird. Die Verdichtung wird vorzugsweise so durchgeführt, dass das Gas unmittelbar nach der Verdichtung einen Druck aufweist, der zwischen 10 und 50 bar(abs.) liegt.

In der Sauergaswäsche, in der Kohlendioxid und Schwefelkomponenten aus dem Einsatz oder aus einem aus dem Einsatz gewonnenen Gasstrom abgetrennt werden, werden vorzugsweise Kohlendioxid und Schwefelkomponenten (z. B. H₂S, COS) separat und mit Produktreinheit gewonnen. Eine besonders bevorzugte Variante des erfindungsgemäßen Verfahrens sieht vor, dass gasförmig aus der Sauergaswäsche abgezogenes CO₂ verflüssigt und als flüssiges CO₂-Produkt oder direkt als gasförmiges CO₂-Produkt an der Anlagengrenze abgegeben wird.

Mit besonderem Vorzug wird die Sauergaswäsche in einer Methanolwascheinrichtung durchgeführt. Um zu verhindern, dass Wasser ausfriert und in der Methanolwascheinrichtung zu Blockierungen führt, sieht eine Weiterbildung des erfindungsgemäßen Verfahrens vor, dass Wasser aus dem der Methanolwascheinrichtung zuströmenden Gasstrom weitgehend entfernt wird. Zweckmäßiger Weise wird der Gasstrom hierzu vor dem Eintritt in die Methanolwascheinrichtung bis auf Temperaturen unterhalb des Wassertaupunktes abgekühlt und das auskondensierte Wasser in einer geeignete Einrichtung, wie z. B. einem Phasentrenner, aus dem Gasstrom abgetrennt.

Um zu verhindern, dass Kohlendioxid und/oder Wasser in die kryogenen Gaszerlegung eintreten, wegen der dort herrschenden tiefen Temperaturen ausfrieren und in der kryogenen Gaszerlegungseinrichtung zu Blockierungen führen, ist erfindungsgemäß zwischen Sauergaswäsche und kryogener Gaszerlegung ein Gastrocknungsschritt vorgesehen, in welchem aus dem in den vorangehenden Verfahrensschritten aus dem Einsatz erzeugten Gasstrom Kohlendioxid und/oder Wasser, vorzugsweise durch Absorption, weitgehend entfernt werden.

In der kryogenen Gaszerlegung, bei der es sich vorzugsweise um einen Kondensationsprozess handelt, wird aus dem zugeführten Gasstrom, der weitgehend noch aus Wasserstoff und/oder Kohlenmonoxid sowie Stickstoff und Argon besteht, zumindest ein Stoffstrom erzeugt, der-gegebenenfalls nach einem weiteren Reinigungsschritt - als Produkt abgegeben wird. Bevorzugte Varianten des erfindungsgemäßen Verfahrens sehen vor, dass in der kryogenen Gaszerlegung neben einem H₂-reichen Stoffstrom und /oder einem Kohlenmonoxidprodukt ein gasförmiges und/oder flüssiges Stickstoffprodukt und/oder ein flüssiges Argonprodukt erzeugt werden. Für den Fall, dass ein in der kryogenen Gaszerlegung erzeugter H₂-reicher Stoffstrom keine Wasserstoffproduktreinheit aufweist, wird aus dem H₂-reichen Stoffstrom zweckmäßiger Weise durch Druckwechseladsorption oder in einem Membranverfahren ein Wasserstoffprodukt erzeugt.

Häufig ist der für ein Wasserstoffprodukt erzielbare Gewinn höher als derjenige für ein Kohlenmonoxidprodukt. Beispielsweise besteht in einer Raffinerie, in der, wie oben beschrieben, als Einsatz geeignete Abgase anfallen, ein Bedarf an Wasserstoff, der für Hydrierzwecke verwendet wird. Dagegen müsste ein Kohlenmonoxidprodukt mit wirtschaftlichen Einbußen zu einem externen Abnehmer exportiert werden, da innerhalb der Raffinerie oft kein Bedarf für reines CO vorhanden ist. Eine weitere Ausgestaltung des erfindungsgemäßen Verfahrens sieht daher vor, dass zumindest eine Teilmenge des Einsatzes oder eines aus dem Einsatz erzeugten H₂- und/oder CO enthaltenden Gasstromes zur Erhöhung des H₂/CO-Verhältnisses einer Wassergas-Shift-Reaktion, bei der es sich um eine Hochtemperatur-Shift oder/und eine Mitteltemperatur-Shift oder/und eine Niedertemperatur-Shift oder/und eine Isotherm-Shift handelt, unterzogen wird. Die Wassergas-Shift-Reaktion wird erfindungsgemäß vor oder nach dem Verdichtungsschritt durchgeführt. Damit genügend Wassermoleküle als Reaktionspartner zur Verfügung stehen, wird der zu behandelnden Gasstrom zweckmäßiger Weise vor der Wassergas-Shift-Reaktion mit Wasserdampf angereichert.

Wegen ihrer ähnlichen physikalischen Eigenschaften, ist die Trennung von Stickstoff und Kohlenmonoxid in einer kryogenen Gaszerlegung sehr schwierig. Um aus einem Stickstoff und Kohlenmonoxid enthaltenden Gasgemisch Stickstoff in Produktqualität zu gewinnen muss daher ein erheblicher Aufwand betrieben werden, durch den die Wirtschaftlichkeit des Trennprozesses stark beeinträchtigt wird. Soll oder kann, z. B. wegen eines zu geringen CO-Gehalts des zu trennenden Gases, kein Kohlenmonoxidprodukt erzeugt werden, sieht eine weitere bevorzugte Variante des erfindungsgemäßen Verfahrens daher vor, dass das der kryogenen Gaszerlegung zuzuführende Gas einer Methanisierung unterzogen wird, wobei Kohlenmonoxid mit H₂ in Methan (CH₄) und Wasser umgewandelt wird. Die bei der Methanisierung gebildeten Stoffe können mit vergleichsweise geringem Aufwand aus dem Gasstrom angetrennt werden. So wird Wasser beispielsweise in der Gastrocknung entfernt, während CH₄ in der kryogenen Gaszerlegung abgetrennt und als Abgas abgeführt wird. Zweckmäßiger Weise wird die Methanisierung vor der Gastrocknung und nach der Sauergaswäsche durchgeführt.

Um auch einen Einsatz behandeln zu können, der neben gasförmigen Bestandteilen auch Feststoffe (z. B. Staub, Ruß) enthält, sieht eine weitere Ausgestaltung des erfindungsgemäßen Verfahrens vor, dass vor der Verdichtung in einem Reinigungsschritt Feststoffe aus dem Einsatz vorzugsweise durch Wäsche oder/und Filterung oder/und Trägheitsabscheidung abgetrennt werden.

Das erfindungsgemäße Verfahren eignet sich besonders für die Verarbeitung von Abgasen wie sie in Raffinerien und dort speziell bei Spaltung von schweren (langkettigen) Kohlenwasserstoffen mittels Fluid Catalytic Cracking (FCC) oder in einem Integrated Fluid Coking-Gasification-Prozess entstehen. Eine bevorzugte Ausgestaltung des erfindungsgemäßen Verfahrens sieht daher vor, dass als Einsatz Abgas aus einem FCC- oder einem Integrated Fluid Coking-Gasification-Prozess verwendet wird.

Die Erfindung betrifft ferner eine Vorrichtung zur Behandlung eines zum überwiegenden Teil aus Stickstoff (N₂), Kohlenmonoxid (CO) und Wasserstoff (H₂) bestehenden und weitere Luftkomponenten (z. B. Argon) sowie Kohlendioxid (CO₂) und Wasserdampf enthaltenden Einsatzes.

Vorrichtungsseitig wird die gestellte Aufgabe dadurch gelöst, dass sie Einrichtungen zur Reinigung und Gaszerlegung umfasst, in denen aus dem Einsatz ein H₂- und/oder ein CO-Produkt sowie zumindest ein weiteres aus einer Luftkomponente bestehendes Produkt gewinnbar sind.

Eine bevorzugte Ausgestaltung der erfindungsgemäßen Vorrichtung sieht vor, dass sie Einrichtungen zur Gasverdichtung (Verdichter), Sauergaswäsche, Gastrocknung sowie zur kryogenen Gaszerlegung umfasst, wobei die Einrichtungen in der angegebenen Reihenfolge hintereinander angeordnet sind.

Um zu erreichen, dass die zu behandelnden Gasströme stets mit einer geeigneten Temperatur in eine der Teileinrichtungen der erfindungsgemäßen Vorrichtung einströmen, sieht eine Ausgestaltung dieser Vorrichtung Einrichtungen zur Kühlung oder Erwärmung der Gasströme vor.

Der Verdichter ist vorzugsweise so ausgeführt, dass ein ihm zugeführter Gastrom auf einen Druck zwischen 10 und 50bar(abs.) verdichtbar ist.

In der Einrichtung zur Sauergaswäsche, bei der es sich bevorzugt um eine Methanolwäsche handelt, sind zweckmäßiger Weise Kohlendioxid und Schwefelverbindungen (z. B. H₂S, COS) unabhängig voneinander aus dem in die Sauergaswäsche eintretenden Gastrom abtrenn- und als Produkte gewinnbar. Eine besonders bevorzugte Variante der erfindungsgemäßen Vorrichtung sieht vor, dass gasförmig aus der Sauergaswäsche abgezogenes CO₂ einer CO₂-Verflüssigungseinrichtung zuführ- und in dieser zu einem flüssigen CO₂-Produkt verflüssigbar ist.

Bei der Einrichtung zur Gastrocknung handelt es sich erfindungsgemäß um eine Einrichtung, in der CO₂ und/oder Wasser aus dem der kryogenen Gaszerlegungseinrichtung zuströmenden Gasstrom weitgehend vollständig entfernbar sind. Vorzugsweise handelt es sich bei der Einrichtung zur Gastrocknung um einen Absorber, in dem CO₂ und/oder Wasser absorptiv aus dem Gasstrom entfernt werden.

Die Einrichtung zur kryogenen Gaszerlegung, in der ein eintretender, weitgehend aus Wasserstoff und/oder Kohlenmonoxid sowie Stickstoff und Argon bestehender Gasstrom vorzugsweise in einem Kondensationsprozess zerlegbar ist, ist so ausgeführt, dass zumindest ein Stoffstrom erzeugbar ist, der, gegebenenfalls nach einem weiteren Reinigungsschritt, als Produkt abgebar ist. Bevorzugte Varianten der erfindungsgemäßen Vorrichtung sehen vor, dass in der kryogenen Gaszerlegung neben einem H₂-reichen Stoffstrom und /oder einem Kohlenmonoxidprodukt ein gasförmiges und/oder flüssiges Stickstoffprodukt und/oder ein flüssiges Argonprodukt erzeugbar sind. Für den Fall, dass ein in der kryogenen Gaszerlegungseinheit erzeugter H₂-reicher Stoffstrom keine Wasserstoffproduktreinheit aufweist, sieht eine weitere Ausgestaltung der erfindungsgemäßen Vorrichtung eine Druckwechseladoptionseinrichtung oder eine Membrane vor, in welchen der H₂-reiche Stoffstrom einleit- und bis auf Wasserstoffproduktreinheit reinigbar ist.

Eine Variante der erfindungsgemäßen Vorrichtung umfasst eine Einrichtung zur Durchführung Wassergas-Shift-Reaktion (Shift-Reaktor), in welcher zumindest eine Teilmenge des Einsatzes einer Wassergas-Shift-Reaktion unterziebar ist, wobei es sich bei dem Shift-Reaktor um einen Hochtemperatur-Shift-Reaktor oder/und einen Mitteltemperatur-Shift-Reaktor oder/und einen Niedertemperatur-Shift-Reaktor oder/und eine Isotherm-Shift-Reaktor handelt. Der Shift-Reaktor ist vor oder hinter dem Verdichter angeordnet.

Eine Weiterbildung der erfindungsgemäßen Vorrichtung sieht vor, dass vor der Sauergaswäsche eine Einrichtung zur Wasserabscheidung angeordnet ist, in der Wasser aus dem in die Sauergaswäsche eintretenden Gastrom entfernbar ist. Vorzugsweise ist das Wasser aus dem Gasstrom in dieser Einrichtung durch Abkühlung auf eine Temperatur unterhalb des Wassertaupunktes auskondensier- und in einem Phasentrenner abscheidbar.

Eine weitere Variante der erfindungsgemäßen Vorrichtung sieht vor, dass sie eine Einrichtung zur Durchführung einer Methanisierungsreaktion (Methanisierungsreaktor) umfasst, in der bei der Wassergas-Shift-Reaktion nicht umgesetztes Kohlenmonoxid mit H₂ durch in Methan (CH₄) und Wasser umgewandelbar ist, wobei der Methanisierungsreaktor bevorzugt vor der Einrichtung zur Gastrocknung und nach Einrichtung zur Sauergaswäsche angeordnet ist.

Um auch einen mit Feststoffen beladen Einsatz behandeln zu können, sieht eine Ausgestaltung der erfindungsgemäßen Vorrichtung eine vor dem Verdichter angeordnete Einrichtung zur Feststoffentfernung zur Feststoffentfernung vor, bei der es sich zweckmäßiger Weise um eine Gaswäsche oder/und Gasfilterung oder/und Trägheitsabscheidung handelt.

Die erfindungsgemäße Vorrichtung eignet sich insbesondere zur Behandlung von Abgasen aus FCC- oder Integrated Fluid Coking-Gasification-Anlagen.

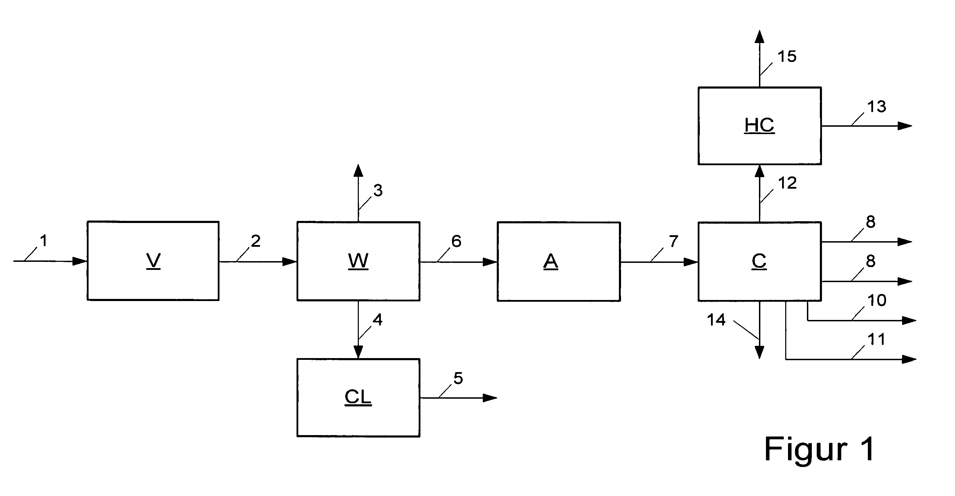

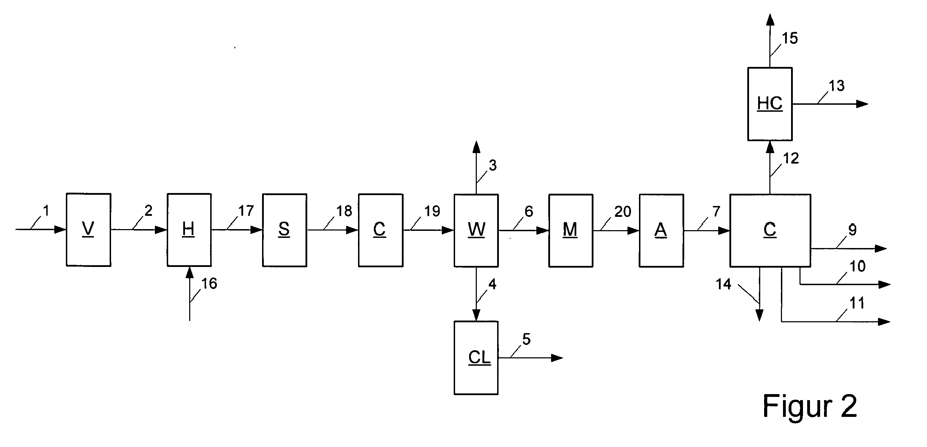

Im Folgenden soll die Erfindung anhand der beiden in den Figuren 1 und 2 schematisch dargestellten Ausführungsbeispiele näher erläutert werden. In beiden Ausführungsbeispielen, bei denen gleiche Anlageneile mit gleichen Bezugszeichen gekennzeichnet sind, wird ein zum überwiegenden Teil aus Stickstoff (N₂), Wasserstoff (H₂) und Kohlenmonoxid (CO) bestehendes, Schwefelkomponenten (H₂S, COS), Argon (Ar), Kohlendioxid (CO₂) und Wasserdampf (H₂O) enthaltendes Gas (Einsatz) in mehrere wirtschaftlich verwertbare Produkte zerlegt.

Die Figur 1 zeigt die Erfindung in ihrer einfachsten Ausführung. Das H₂/CO-Verhältnis im Einsatz entspricht den Anforderungen und muss nicht geändert werden.

Über Leitung 1 wird der zu behandelnde Einsatz mit einem Druck von ca. 3 bar dem Verdichter V zugeleitet und dort auf ein Druck verdichtet, der zwischen 10 und 50bar(abs.) liegt. Der verdichtete Einsatz wird anschließend abgekühlt (nicht dargestellt) und über Leitung 2 in die Methanolwäsche W eingeleitet, in der CO₂ und Schwefelkomponenten (H₂S, COS) aus dem Einsatz selektiv abgetrennt werden. Die Schwefelkomponenten werden über Leitung 3 aus der Methanolwäsche W abgezogen und einer (nicht dargestellten) Einrichtung zur Gewinnung von Schwefel zugeführt, während das abgetrennte CO₂ gasförmig über Leitung 4 der CO₂-Verflüssigungseinrichtug CL zugeleitet und dort verflüssigt wird, bevor es über Leitung 5 als flüssiges CO₂-Produkt weitergeleitet wird.

Im gewaschenen Einsatz noch verbliebene Spuren von CO₂ und Wasser werden im Adsorber A, dem der gewaschene Einsatz über Leitung 6 zuströmt, entfernt. Das trocken und CO₂-frei aus dem Adsorber A austretende Gas, wird über Leitung 7 in die kryogene Gaszerlegungseinrichtung C eingeleitet und dort in ein CO-Produkt 8, ein flüssiges Stickstoffprodukt 9, ein gasförmiges Stickstoffprodukt 10 sowie ein flüssiges Ar-Produkt 11 zerlegt. Der in der kryogenen Gaszerlegungseinrichtung C abgetrennte Wasserstoff 12 weist noch keine Produktreinheit auf und wird daher der Wasserstoffreinigungseinrichtung HC zugeleitet, in der ein H₂-Produkt 13 erzeugt wird. Über die Leitungen 14 und 15 werden nicht weiter wirtschaftlich verwertbare Fraktionen abgezogen und einer Entsorgung (nicht dargestellt) zugeführt.

In dem in Figur 2 schematisch dargestellten Ausführungsbeispiel wird aus dem Wasserstoff und Kohlenmonoxid enthaltenden Einsatz zwar ein Wasserstoff-, jedoch kein Kohlenmonoxidprodukt gewonnen.

Der über Leitung 1 zugeführte und im Verdichter V verdichtete Einsatz 2 wird im Erhitzer H angewärmt und mit überhitztem Wasserdampf 16 gesättigt, bevor es über Leitung 17 in den Wassergas-Shift-Reaktor S eingeleitet wird. Im Wassergas-Shift-Reaktor S reagiert das im Einsatz enthaltene CO mit katalytischer Unterstützung mit Wasser zu H₂ und CO₂. Da das Reaktionsgleichgewicht nicht vollständig auf der H₂-Seite liegt, enthält der über Leitung 18 abgeführte Gasstrom immer noch einen CO-Anteil, der im einstelligen Prozentbereich liegt. Im Gaskühler C wird das im Gasstrom 18 enthaltene Wasser durch Abkühlung bis unter den Wassertaupunkt auskondensiert und entfernt. Der getrocknete Gasstrom wird über Leitung 19 in die Methanolwäsche W eingeleitet, in der CO₂ und Schwefelkomponenten (H₂S, COS) aus dem Gasstrom selektiv abgetrennt werden. Die Schwefelkomponenten werden über Leitung 3 aus der Methanolwäsche W abgezogen und einer (nicht dargestellten) Einrichtung zur Gewinnung von Schwefel zugeführt, während das abgetrennte CO₂ gasförmig über Leitung 4 der CO₂-Verflüssigungseinrichtug CL zugeleitet und dort verflüssigt wird, bevor es über Leitung 5 als flüssiges CO₂-Produktweitergeleitet wird.

Der gewaschen aus der Methanolwäsche W austretende Gasstrom 6 wird in den Reaktor M eingeleitet, in welchem er angewärmt und anschließend über einen Katalysator geleitet wird, wobei das im Gasstrom 6 enthaltene Kohlenmonoxid nahezu vollständig mit H₂ in Methan (CH₄) und Wasser umgewandelt wird. Nach einer ebenfalls im Reaktor M durchgeführten Abkühlung, wird ein praktisch CO-freier Gasstrom 20 aus dem Reaktor M abgezogen und in den Adsorber A eingeleitet, wo noch verbliebene Spuren von CO₂ sowie Wasser entfernt werden. Das trocken und CO₂-frei aus dem Adsorber A austretende Gas, wird über Leitung 7 in die kryogene Gaszerlegungseinrichtung C eingeleitet und dort in ein flüssiges Stickstoffprodukt 9, ein gasförmiges Stickstoffprodukt 10 sowie ein flüssiges Ar-Produkt 11 zerlegt. Der in der kryogenen Gaszerlegungseinrichtung C abgetrennte Wasserstoff 12 weist noch keine Produktreinheit auf und wird daher der Wasserstoffreinigungseinrichtung HC zugeleitet, in der ein H₂-Produkt 13 erzeugt wird. Über die Leitungen 14 und 15 werden nicht weiter wirtschaftlich verwertbare Fraktionen (z. B. ein Abgas, das das im Reaktor M gebildete CH₄ enthält) abgezogen und einer Entsorgung (nicht dargestellt) zugeführt.

## Patentansprüche

1. Verfahren zur Behandlung eines zum überwiegenden Teil aus Stickstoff (N₂), Kohlenmonoxid (CO) und Wasserstoff (H₂) bestehenden und weitere Luftkomponenten, wie z. B. Argon (Ar), sowie Kohlendioxid (CO₂), Wasserdampf und Schwefelverbindungen enthaltenden Einsatzes, **dadurch gekennzeichnet, dass** aus dem Einsatz durch Reinigung und Gaszerlegung ein H₂- und/oder ein CO-Produkt sowie zumindest ein weiteres, aus einer Luftkomponente bestehendes Produkt (Zusatzprodukt) gewonnen werden.

2. Verfahren nach Anspruch 1, **dadurch gekennzeichnet, dass** es die aufeinander folgenden Verfahrensschritte Verdichtung, Sauergaswäsche, Gastrocknung sowie kryogene Gaszerlegung umfasst.

3. Verfahren nach einem der Ansprüche 1 bis 2, **dadurch gekennzeichnet, dass** zumindest eine Teilmenge des Einsatzes zur Erhöhung des H₂/CO-Verhältnisses einer Wassergas-Shift-Reaktion unterzogen wird, bei der es sich um eine Hochtemperatur-Shift oder/und eine Mitteltemperatur-Shift oder/und eine Niedertemperatur-Shift oder/und eine Isotherm-Shift handelt.

4. Verfahren nach Anspruch 3, **dadurch gekennzeichnet, dass** die Wassergas-Shift-Reaktion vor oder nach der Verdichtung des Einsatzes durchgeführt wird.

5. Verfahren nach einem der Ansprüche 2 bis 4, **dadurch gekennzeichnet, dass** Wasser aus dem in die Sauergaswäsche eintretenden Gasstrom weitgehend vollständig entfernt wird, wozu in die Sauergaswäsche eintretenden Gasstrom vorzugsweise bis auf eine Temperatur unterhalb des Wassertaupunktes abgekühlt wird.

6. Verfahren nach einem der Ansprüche 2 bis 5, **dadurch gekennzeichnet, dass** in der Sauergaswäsche, bei der es sich bevorzugt um eine Methanolwäsche handelt, Kohlendioxid und Schwefelverbindungen unabhängig voneinander aus dem Gasstrom abgetrennt und als Produkte gewonnen werden.

7. Verfahren nach einem der Ansprüche 3 bis 6, **dadurch gekennzeichnet, dass** in der Wassergas-Shift nicht umgesetztes Kohlenmonoxid mit H₂ durch Methanisierung in Methan (CH₄) und Wasser umgewandelt wird, wobei sich die Methanisierung vorzugsweise vor der Gastrocknung und nach der Sauergaswäsche durchgeführt wird.

8. Verfahren nach einem der Ansprüche 2 bis 7, **dadurch gekennzeichnet, dass** das Einsatz vor der Verdichtung in einem Reinigungsschritt von Feststoffen gereinigt wird.

9. Verfahren nach einem der Ansprüche 1 bis 8, **dadurch gekennzeichnet, dass** es sich bei dem Einsatz um Abgas aus einem FCC- oder einem Integrated Fluid Coking-Gasification-Prozess handelt.

10. Vorrichtung zur Behandlung eines zum überwiegenden Teil aus Stickstoff (N₂), Kohlenmonoxid (CO) und Wasserstoff (H₂) bestehenden und weitere Luftkomponenten (z. B. Argon) sowie Kohlendioxid (CO₂) und Wasserdampf enthaltenden Einsatzes, **dadurch gekennzeichnet, dass** sie Einrichtungen zur Reinigung und Gaszerlegung umfasst, in denen aus dem Einsatz ein H₂- und/oder ein CO-Produkt sowie zumindest ein weiteres aus einer Luftkomponente bestehendes Produkt gewinnbar sind.

11. Vorrichtung nach Anspruch 10, **dadurch gekennzeichnet, dass** sie Einrichtungen zur Gasverdichtung (Verdichter), Sauergaswäsche, Gastrocknung sowie zur kryogenen Gaszerlegung umfasst, wobei die Einrichtungen in der angegebenen Reihenfolge hintereinander angeordnet sind.

12. Vorrichtung nach Anspruch 11, **dadurch gekennzeichnet, dass** eine Einrichtung zur Durchführung Wassergas-Shift-Reaktion (Shift-Reaktor) umfasst, in welcher zumindest eine Teilmenge des Einsatzes einer Wassergas-Shift-Reaktion unterziebar ist, wobei es sich bei dem Shift-Reaktor um einen Hochtemperatur-Shift-Reaktor oder/und einen Mitteltemperatur-Shift-Reaktor oder/und einen Niedertemperatur-Shift-Reaktor oder/und eine Isotherm-Shift-Reaktor handelt.

13. Vorrichtung nach Anspruch 12, **dadurch gekennzeichnet, dass** der Shift-Reaktor vor oder hinter dem Verdichter angeordnet ist.

14. Vorrichtung nach einem der Ansprüche 11 bis 13, **dadurch gekennzeichnet, dass** vor der Sauergaswäsche eine Einrichtung zur Wasserabscheidung angeordnet ist, in der Wasser aus dem in die Sauergaswäsche eintretenden Gastrom entfernbar ist.

15. Vorrichtung nach einem der Ansprüche 11 bis 14, **dadurch gekennzeichnet, dass** in der Einrichtung zur Sauergaswäsche, bei der es sich bevorzugt um eine Methanolwäsche handelt, in der aus dem in die Sauergaswäsche eintretenden Gastrom Kohlendioxid und Schwefelverbindungen unabhängig voneinander abtrennbar und als Produkte gewinnbar sind.

16. Vorrichtung nach einem der Ansprüche 12 bis 15, **dadurch gekennzeichnet, dass** sie eine Einrichtung zur Durchführung einer Methanisierungsreaktion (Methanisierungsreaktor) umfasst, in der bei der Wassergas-Shift-Reaktion nicht umgesetztes Kohlenmonoxid mit H₂ durch in Methan (CH₄) und Wasser umgewandelbar ist, wobei der Methanisierungsreaktor bevorzugt vor der Einrichtung zur Gastrocknung und nach Einrichtung zur Sauergaswäsche angeordnet ist.

17. Vorrichtung nach einem der Ansprüche 11 bis 15, **dadurch gekennzeichnet, dass** vor dem Verdichter eine Einrichtung zur Feststoffentfernung angeordnet ist

18. Vorrichtung nach einem der Ansprüche 10 bis 17, **dadurch gekennzeichnet, dass** mit ihr Abgase aus FCC- oder Integrated Fluid Coking-Gasification-Anlagen behandelbar sind.
